# EUROPÄISCHE PATENTSCHRIFT

(11) **EP 0 688 691 B1**
(45) Veröffentlichungstag und Bekanntmachung des Hinweises auf die Patenterteilung: **11.03.1998**
(21) Anmeldenummer: 95107209.9
(22) Anmeldetag: 12.05.1995
(51) Int. Cl.: B60K 15/035, F04B 45/033, F02M 25/08

(54) **Pumpvorrichtung, insbesondere für ein Tanksystem einer Brennkraftmaschine**
Pump device for a tank system of internal combustion engines
Dispositif de pompage pour un système de réservoir d'un moteur à combustion interne

(30) Priorität: 16.06.1994 DE 4420960
(43) Veröffentlichungstag der Anmeldung: 27.12.1995
(73) Patentinhaber: ROBERT BOSCH GMBH, 70442 Stuttgart (DE)
(72) Erfinder: Schulz, Wolfgang, D-74321 Bietigheim-Bissingen (DE)

(56) Entgegenhaltungen:
- WO-A-94/15090
- WO-A-94/27131
- DR. STOCKER, DR. CONSTIEN '4. AACHENER KOLLOQUIUM, FAHRZEUG UND MOTORTECHNIK '93' 5.Oktober 1993 , EUROGRESS , AACHEN,GERMANY TANKDIAGNOSE: EINE NEUE METHODE ZUR SICHEREN LECKAGE-ERKENNUNG * Seite 467 - Seite 477; Abbildungen 1-8 *

## Beschreibung

### Stand der Technik

Die Erfindung geht aus von einer Pumpvorrichtung, insbesondere für ein Tanksystem einer Brennkraftmaschine, mit einem integrierten Elektromagnetventil, nach der Gattung des Anspruchs 1, beziehungsweise des Anspruchs 5. Es ist schon eine Pumpvorrichtung bekannt (4. Aachener Kolloquium, Fahrzeug- und Motorentechnik '93, Seiten 467 bis 477, Verfasser: Dr.-Ing. H. Stocker, Dr.-Ing. M. Constien), die zur Dichtheitsprüfung des Tanksystems vorgesehen ist, um dem Tanksystem über eine Belüftungsleitung eines Adsorptionsfilters ein definiertes Volumen zuzuführen, so daß eine Druckerhöhung im Tanksystem bewirkt wird. Um festzustellen, ob das Tanksystem druckdicht ist, wird nach abgeschlossenem Druckaufbau im Tanksystem geraume Zeit gewartet, um bei einem Druckabbau im Tanksystem auf eine Leckage zu schließen, wobei die zum Druckabbau verstrichene Zeit ein Maß für die Größe der Leckage ist. Weiterhin umfaßt das Tanksystem einen mit dem Adsorptionsfilter verbundenen Brennstofftank und ein zwischen dem Adsorptionsfilter und einem Ansaugrohr der Brennkraftmaschine zwischengeschaltetes Regenerierventil.

Die im eingangs genannten Stand der Technik auf Seite 476 in Bild 7 dargestellte Pumpvorrichtung besitzt ein Schaltventil, das in Form eines Elektromagnetventils ausgebildet ist und das mit einem Unterdruckanschluß mit dem Ansaugrohr der Brennkraftmaschine und mit einer Schlauchleitung mit einem Umgebungsluftfilter mit der Umgebung verbunden ist. Durch Schalten des Schaltventils wird ein von einer Pumpmembran und dem Schaltventil begrenzter Pumpraum der Pumpvorrichtung wechselnd mit Unterdruck des Ansaugrohres und mit Umgebungsdruck beaufschlagt, so daß sich die Pumpmembran nach unten und nach oben bewegt. Bei der Beaufschlagung des Pumpraums mit Unterdruck bewegt sich die Pumpmembran gegen die Druckkraft einer Pumpfeder, in Bild 7 nach oben, wobei Umgebungsluft durch einen in Bild 7 nicht näher dargestellten Umgebungsluftfilter über eine Zuführleitung in einen Förderraum einströmt. Der Förderraum ist gegenüberliegend dem Pumpraum vorgesehen und wird von der Pumpmembran und zwei Rückschlagventilen abgeschlossen. Bei der Belüftung des Pumpraums, beziehungsweise Beaufschlagung des Pumpraums mit Umgebungsdruck, bewegt sich die Pumpmembran unterstützt durch die Druckkraft der Pumpfeder nach unten, wobei die im Pumpraum bei geschlossenen Rückschlagventilen eingeschlossene Umgebungsluft im Förderraum komprimiert wird. Beim Erreichen eines bestimmten Überdrucks im Förderraum öffnet das in Bild 7 rechts dargestellte Rückschlagventil, so daß die komprimierte Umgebungsluft über eine Förderleitung in die Belüftungsleitung des Adsorptionsfilters einströmen kann.

Die Pumpmembran ist weiterhin mit einem Stößel verbunden, um durch die Bewegung der Pumpmembran ein in Bild 7 unterhalb der Pumpmembran dargestelltes Absperrventil zu steuern, so daß dieses nur während der Pumpphase und nur bei bewegter Pumpmembran eine Verbindung der Belüftungsleitung des Adsorptionsfilters, beziehungsweise der Förderleitung zur Zuführleitung absperrt und bei stromlosem Schaltventil, beziehungsweise nicht bewegter Pumpmembran die Förderleitung zur Umgebung freischaltet. Da bei jeder Umschaltung von Unterdruck auf Umgebungsdruck, Umgebungsluft in den Pumpraum einströmt, wird das Schaltventil über eine vorgesehene Belüftungsleitung belüftet, die, wie dem Bild 7 zu entnehmen ist, in Form eines Schlauches ausgebildet ist. Der Schlauch ist üblicherweise aus Kunststoff hergestellt und führt vom Schaltventil zum Absperrventil um das Gehäuse der Pumpvorrichtung herum. Ein derartiger, relativ langer Schlauch hat jedoch den Nachteil, daß dieser insbesondere an seinen Verbindungsstellen, beispielsweise aufgrund von Alterungsvorgängen, undicht werden kann. Bei undichtem Schlauch ist jedoch die Funktionssicherheit der Pumpvorrichtung gefährdet, da dann ungefilterte Umgebungsluft direkt in das Schaltventil eingesaugt wird, so daß sich durch ungefilterte Umgebungsluft Ablagerungen bilden können. Zudem besteht die Gefahr, daß bei niedriger Umgebungstemperatur der aus Kunststoff hergestellte Schlauch durch Sprödheit, insbesondere an seinen Verbindungsstellen undicht wird. Darüber hinaus ist bei der Herstellung der Pumpvorrichtung eine sorgfältige Montage erforderlich, um insbesondere ein Knicken des Schlauches auszuschließen. Außerdem ist nach der Montage des Schlauches eine Prüfung der Dichtheit der Schlauchverbindung notwendig, so daß insbesondere bei einer Massenherstellung der Pumpvorrichtung hohe Produktionskosten zu erwarten sind.

### Vorteile der Erfindung

Die erfindungsgemäße Pumpvorrichtung mit den kennzeichnenden Merkmalen des Anspruchs 1, beziehungsweise des Anspruchs 5 hat demgegenüber den Vorteil, daß der nach dem Stand der Technik erforderliche Schlauch am Schaltventil entfällt, so daß die erfindungsgemäße Pumpvorrichtung insbesondere in Massenherstellung besonders kostengünstig herstellbar ist und gegenüber dem Stand der Technik eine erhöhte Funktionssicherheit aufweist. Vorteilhafterweise besitzt die erfindungsgemäße Pumpvorrichtung einen besonders kompakten Aufbau, so daß sich diese insbesondere für enge Einbauverhältnisse, beispielsweise im Motorenraum eines Kraftfahrzeuges, besonders eignet.

Durch die in den Unteransprüchen aufgeführten Maßnahmen sind vorteilhafte Weiterbildungen und Verbesserungen der im Anspruch 1, beziehungsweise im Anspruch 5 angegebenen Pumpvorrichtung möglich.

### Zeichnung

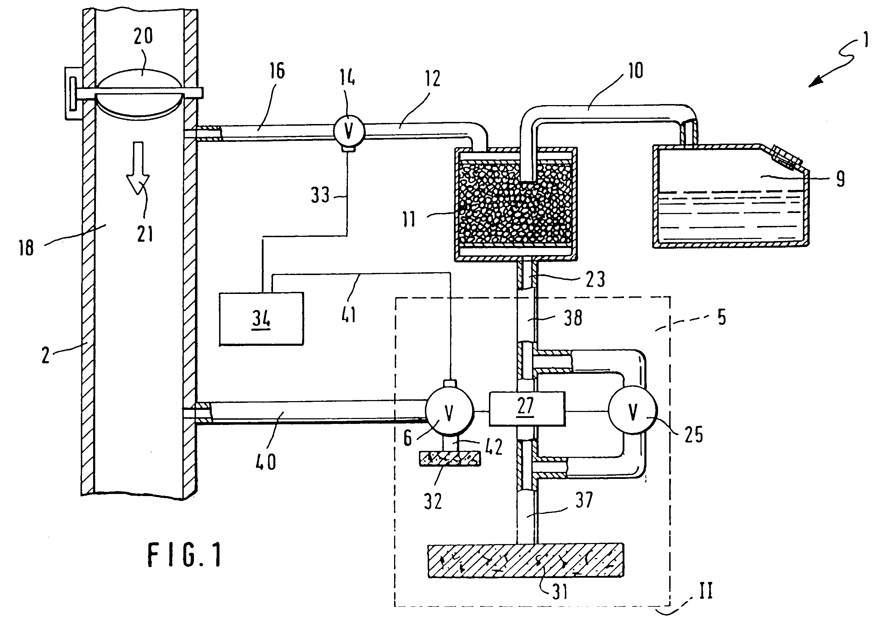

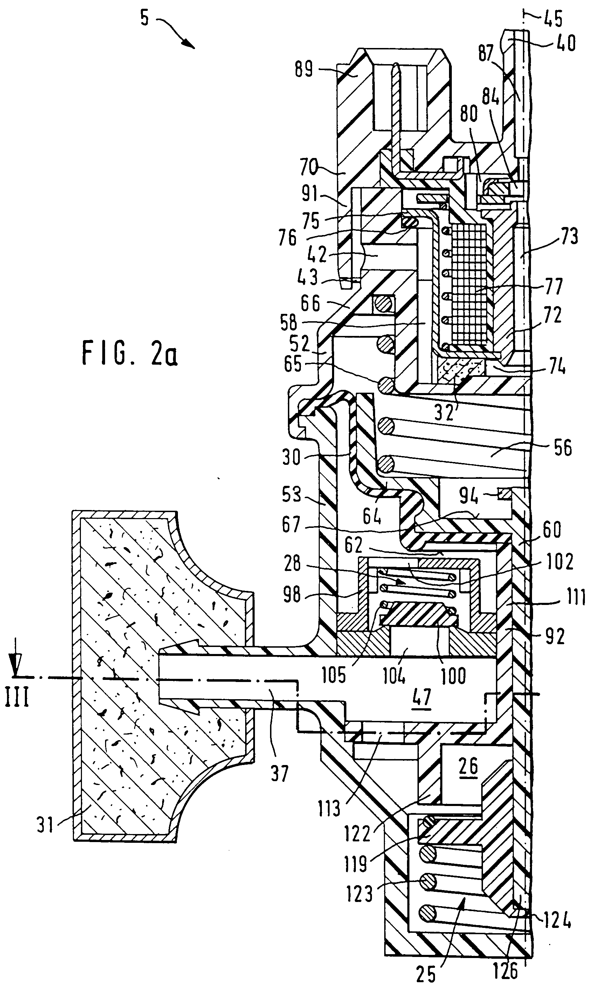

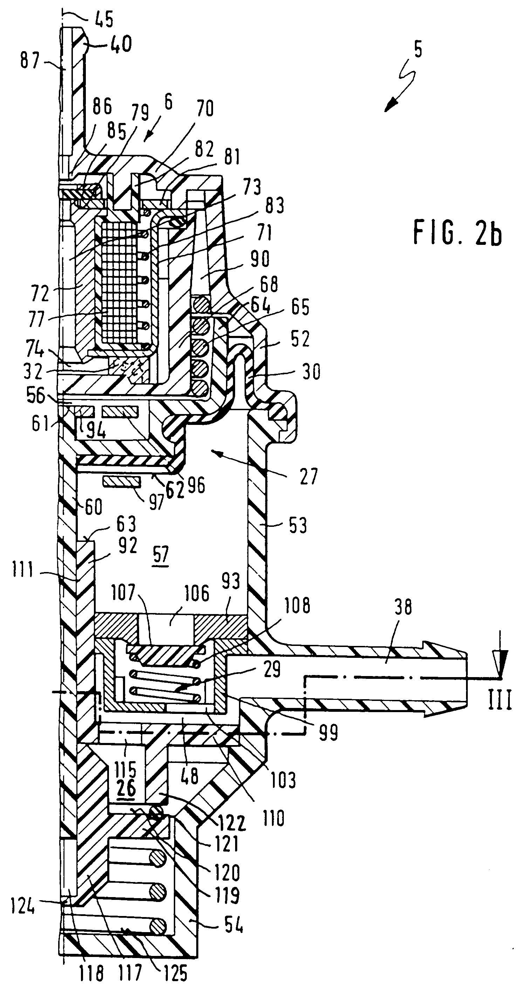

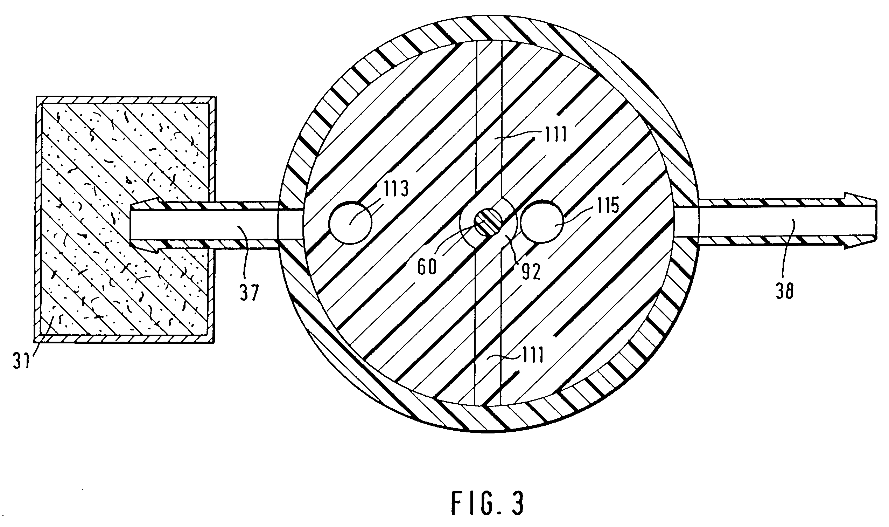

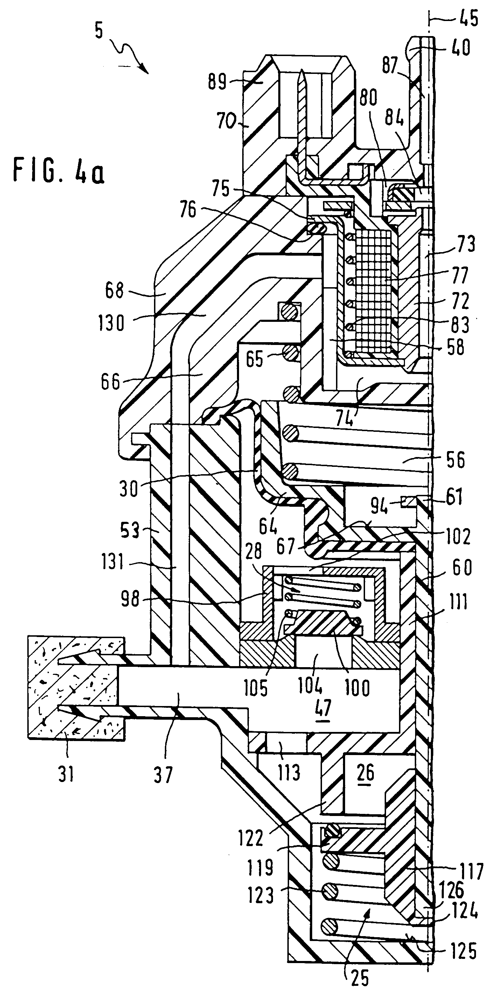

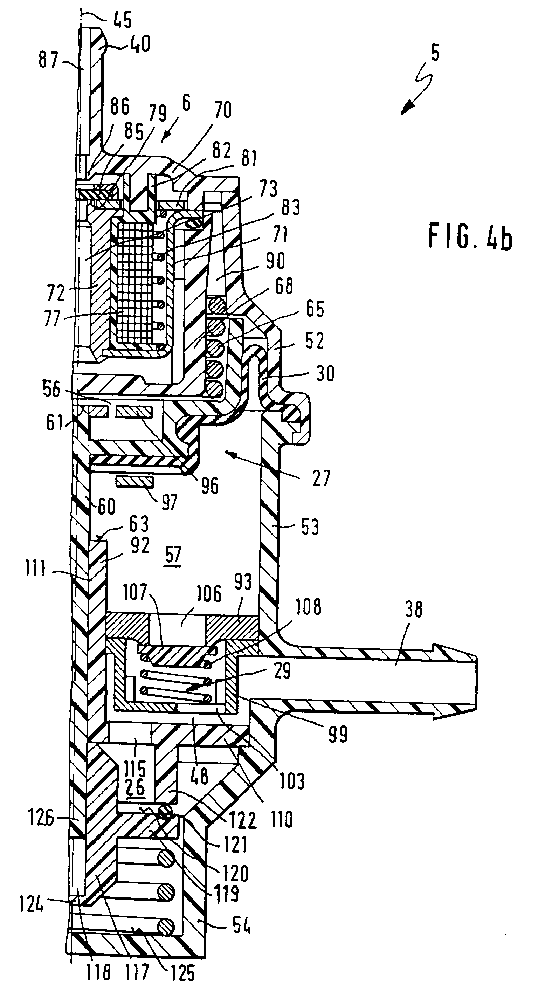

Ausführungsbeispiele der Erfindung sind in der Zeichnung vereinfacht dargestellt und in der nachfolgenden Beschreibung näher erläutert. Es zeigen Figur 1 ein Tanksystem einer Brennkraftmaschine, das mit einer erfindungsgemäßen Pumpvorrichtung ausgestattet ist, die in Figur 1 in schematisch vereinfachter Funktionsdarstellung innerhalb einer Linie II gezeigt ist, Figur 2a/2b eine Schnittdarstellung der erfindungsgemäßen Pumpvorrichtung gemäß einem ersten Ausführungsbeispiel, Figur 3 einen Schnitt entlang der Linie III-III in Figur 2a/2b gemäß dem ersten Ausführungsbeispiel, Figur 4a/4b eine Schnittdarstellung der erfindungsgemäßen Pumpvorrichtung gemäß einem zweiten Ausführungsbeispiel.

### Beschreibung der Ausführungsbeispiele

Die Figur 1 zeigt ein mit 1 gekennzeichnetes Tanksystem einer nicht näher dargestellten Brennkraftmaschine 2, das mit einer in vereinfachter Funktionsdarstellung innerhalb der Linie II gezeigten Pumpvorrichtung 5 ausgestattet ist. Weiterhin umfaßt das Tanksystem 1 einen Brennstofftank 9, der zur Versorgung der Brennkraftmaschine 2 mit Brennstoff dient und der über eine Tankleitung 10 mit einem Adsorptionsfilter 11 verbunden ist. Der Adsorptionsfilter 11 ist mit einem Adsorptionsmedium, insbesondere mit Aktivkohle, teilweise gefüllt und über eine Verbindungsleitung 12 mit einem Regenerierventil 14 verbunden, das über eine Ventilleitung 16 an ein Ansaugrohr 18 der Brennkraftmaschine 2 angeschlossen ist. Die Ventilleitung 16 mündet stromabwärts einer drehbar in das Ansaugrohr 18 der Brennkraftmaschine 2 eingebrachten Drosselklappe 20, in welchem ein Brennstoff-Luft-Gemisch in Richtung eines eingezeichneten Pfeils 21 strömt. Beim Betrieb der Brennkraftmaschine 2 herrscht Unterdruck im Ansaugrohr 18, mit dessen Hilfe bei geöffnetem Regenerierventil 14 die Brennstoffdämpfe aus dem Brennstofftank 9 abgesaugt werden. Die Brennstoffdämpfe gelangen dabei vom Brennstofftank 9 über die Tankleitung 10 in den Adsorptionsfilter 11 und von diesem in die Verbindungsleitung 12, wobei Umgebungsluft durch den Unterdruck im Ansaugrohr 18 über eine Belüftungsleitung 23 des Adsorptionsfilters 11 angesaugt wird, so daß der im Adsorptionsfilter 11 zwischengespeicherte Brennstoff mitgerissen wird.

Die im Adsorptionsfilter 11 gespeicherten Brennstoffdämpfe vermischen sich mit der über die Belüftungsleitung 23 einströmenden Umgebungsluft, wonach die Brennstoffdämpfe über das Regenerierventil 14 und die Ventilleitung 16 in das Ansaugrohr 18 eingeleitet werden, um anschließend in wenigstens einem Brennraum der Brennkraftmaschine zu verbrennen. Dabei stellt ein mit dem Regenerierventil 14 über eine elektrische Steuerleitung 33 verbundenes, elektronisches Steuergerät 34 sicher, daß die Einleitung der Brennstoffdämpfe nur bei ausgewählten Betriebsbereichen der Brennkraftmaschine erfolgt, damit einerseits die Abgasemissionen der Brennkraftmaschine nicht erhöht werden und andererseits eine hohe Laufruhe der Brennkraftmaschine gewährleistet bleibt.

Die in Figur 2a/2b dargestellte, erfindungsgemäße Pumpvorrichtung 5 ist an der Belüftungsleitung 23 des Adsorptionsfilters 11 vorgesehen und setzt sich aus, innerhalb der Linie II in Figur 1 dargestellten, funktionell voneinander getrennten Einzelkomponenten zusammen, welche im wesentlichen ein Schaltventil in Form eines Elektromagnetventils 6, ein Absperrventil 25, einen Pumpteil 27 mit Pumpmembran 30 und Rückschlagventilen 28, 29, einen Umgebungsluftfilter 31 und einen Pumpfilter 32 umfassen. Die Pumpvorrichtung 5 ist zur Dichtheitsprüfung des Tanksystems 1 vorgesehen, bei der dem Tanksystem 1 mittels der Pumpvorrichtung 5 bei geschlossenem Regenerierventil 14 ein definiertes Volumen zuführt wird, so daß eine Druckerhöhung im Tanksystem 1 erfolgt. Nach dem Druckaufbau im Tanksystem 1 wird geraume Zeit gewartet, bis sich dieser gegebenenfalls aufgrund einer Leckage im Tanksystem 1 wieder abbaut, wobei die zum Druckabbau verstrichene Zeit ein Maß für die Größe der Leckage ist. Diese auch als Überdruckmethode bezeichnete Dichtheitsprüfung des Tanksystems 1 ermöglicht, Leckageöffnungen in einer Größenordnung von weniger als 1 mm Durchmesser festzustellen, wobei sich durch einen Kompensationseffekt mögliche Schwierigkeiten einer unterschiedlichen Füllstandshöhe des Brennstofftanks 9 mit Brennstoff vorteilhafterweise vermeiden lassen. Der zu Überprüfungszwecken benötigte Überdruck wird von der erfindungsgemäßen Pumpvorrichtung 5 bereitgestellt, welche beim Pumpvorgang Umgebungsluft über den Umgebungsluftfilter 31 in eine Zuführleitung 37 der Pumpvorrichtung 5 einsaugt, um diese danach mit erhöhtem Druck in eine Förderleitung 38 der Pumpvorrichtung 5 zu pumpen, die mit der Belüftungsleitung 23 des Adsorptionsfilters 11 verbunden ist. Der Pumpteil 27 ist zum Verdichten der Umgebungsluft vorgesehen und umfaßt einen Pumpraum 56, der von der Pumpmembran 30 und zwei Rückschlagventilen 28, 29 abgeschlossen wird. Der Pumpteil 27 wird durch Schalten eines Unterdruckanschlusses 40 des Elektromagnetventils 6 indirekt mittels einer Unterdruckquelle betrieben, wobei der Unterdruckanschluß 40 in Form einer Schlauchleitung ausgebildet ist, die vom Elektromagnetventil 6 zum Ansaugrohr 18 beispielsweise stromabwärts der Drosselklappe 20 führt. Wahrend des Betriebs der Pumpvorrichtung 5, beziehungsweise des Pumpteils 27, nimmt das zwischen der Zuführleitung 37 und der Förderleitung 38 parallel zu den Rückschlagventilen 28, 29 zwischengeschaltete Absperrventil 25 eine Schließstellung ein, um eine Verbindung der Zuführleitung 37 mit der Förderleitung 38 zu unterbrechen. Ist kein Betrieb der Pumpvorrichtung 5, beziehungsweise keine Dichtheitsprüfung des Tanksystems 1 erwünscht, so wird das Absperrventil 25 in einer Offenstellung gehalten, in der die Zuführleitung 37 mit der Förderleitung 38 verbunden ist, so daß bei der Regeneration des Adsorptionsfilters 11 Umgebungsluft vom Umgebungsluftfilter 31 über die Zuführleitung 37 in die Förderleitung 38 und von dieser in die Belüftungsleitung 23 einströmen kann. Das Elektromagnetventil 6 ist über eine elektrische Steuerleitung 41 mit dem elektronischen Steuergerät 34 verbunden, um bei der Dichtheitsprüfung die Pumpvorrichtung 5, beziehungsweise das Elektromagnetventil 6 in bestimmten Intervallen entsprechend anzusteuern, beispielsweise nach jedem Start der Brennkraftmaschine 2.

Anhand Figur 2a/2b, die einen Schnitt der erfindungsgemäßen Pumpvorrichtung 5 zeigt, soll im nachfolgenden der Aufbau und die Funktion der in Figur 1 innerhalb der Linie II schematisch dargestellten Einzelkomponenten der Pumpvorrichtung 5 näher beschrieben werden. Die Pumpvorrichtung 5 weist eine obere Gehäusehälfte 52 und eine untere Gehäusehälfte 53 auf, welche beide beispielsweise aus Kunststoff hergestellt und mittels Ultraschallschweißen miteinander verbunden sind. Zwischen die sich überlappenden Gehäusehälften 52, 53 ist eine bewegliche Wandung in Form einer elastischen Pumpmembran 30 an ihrem Umfang eingespannt. Die Pumpmembran 30 trennt einen Pumpraum 56 von einem gegenüberliegenden Förderraum 57. Der Förderraum 57 wird einerseits begrenzt von der Pumpmembran 30 und andererseits von zwei Rückschlagventilen 28, 29, wobei das Rückschlagventil 28 in Figur 2a links einer die Pumpvorrichtung 5 symmetrisch aufteilenden Längsachse 45 und das Rückschlagventil 29 in Figur 2b rechts der Längsachse 45 dargestellt ist. Die Pumpvorrichtung 5, beziehungsweise die Pumpmembran 30 ist in der Figur 2a im nicht erregten Zustand des Elektromagnetventils 6 gezeigt, während in der Figur 2b die Pumpvorrichtung 5, beziehungsweise die Pumpmembran 30 im erregten Zustand des Elektromagnetventils 6 dargestellt ist. Auf der dem Elektromagnetventil 6 zugewandten Seite der Pumpmembran 30 ist an der Pumpmembran 30 ein Federteller 64 angeordnet, der, wie in der Figur 2a/2b dargestellt ist, einen mittig zur Längsachse 45 orientierten, mit dem Federteller 64 verbundenen oder daran einstückig angeformten Stößel 60 besitzt. Der Federteller 64 dient einerseits dazu, der Pumpmembran 30 eine gewisse Steifigkeit zu verleihen und andererseits zur Abstützung einer Pumpfeder 65, die an dem Federteller 64 und an einem Boden 66 der oberen Gehäusehälfte 52 anliegt.

In einer teilweise in den Pumpraum 56 ragenden Auswölbung 68 des Bodens 66 ist auf seiner dem Pumpraum 56 abgewandten Seite das Elektromagnetventil 6 angeordnet, das nach außen durch einen Deckel 70 abgeschlossen ist. Das Elektromagnetventil 6 weist ein aus magnetisch leitendem Material ausgebildetes, topfförmiges Ventilgehäuse 71 auf, in dem ein rohrförmig ausgebildeter Kern 72 beispielsweise eingenietet ist. In dem Kern 72 ist eine Durchgangsbohrung 73 vorgesehen, die in einem Strömungskanal 74 endet, der zwischen der Auswölbung 68 und dem Ventilgehäuse 71 ausgebildet ist und über eine erfindungsgemäß ausgebildete, direkt zur Umgebung führende Belüftungsöffnung 42 in Verbindung zur Atmosphäre steht. Die Belüftungsöffnung 42 ist in Form einer sich beispielsweise quer zur Längsachse 45 erstrecken Bohrung aus der Auswölbung 68 ausgenommen und führt direkt von der Umgebung in einen ringspaltförmigen, zwischen der Auswölbung 68 und dem Ventilgehäuse 41 gebildeten Zwischenraum 58. Zur Verminderung der Verschmutzungsgefahr übergreift eine Nase 91 des Deckels 70 mit radialem Abstand die Belüftungsöffnung 42. Die Nase 91 besitzt beispielsweise noch einzelne Stege 43, die sich stromabwärts der Belüftungsöffnung 42 radial von der Nase 91 bis zur oberen Gehäusehälfte 52 teilweise erstrecken. Zusätzlich zur Ausbildung einer Nase 91 kann die in den Strömungskanal 74 einströmende Umgebungsluft von einem ringförmig ausgebildeten Pumpfilter 32 gefiltert werden, der beispielsweise zwischen der Auswölbung 68 und dem Ventilgehäuse 71 angeordnet ist. Der Pumpfilter 32 ist zum Beispiel in Form einer äußerst kostengünstigen Filzdichtung ausgebildet, um die über die Belüftungsöffnung 42 in den Zwischenraum 58 und von diesem in den Strömungskanal 74 einstromende Umgebungsluft zu filtern, damit insbesondere eine Verschmutzung im Bereich eines ersten Ventilsitzes 79 und im Bereich eines zweiten Ventilsitzes 86 des Elektromagnetventils 6 vermieden wird.

Innerhalb des Ventilgehäuses 71 ist der Kern 72 von einer Magnetwicklung 77 umgeben. Der Kern 72 ragt mit einem als ersten Ventilsitz 79 ausgebildeten Absatz aus der Magnetwicklung 77 heraus. Über dem ersten Ventilsitz 79 mündet die Durchgangsbohrung 73 des Kerns 72 in einen zwischen dem Ventilgehäuse 71 und dem Deckel 70 gebildeten Raum 80. Im Raum 80 ist dem Kern 72 gegenüberliegend ein plattenförmig ausgebildeter Flachanker 81 angeordnet, der über Führungszapfen 82 in axialer Richtung des Ventils geführt wird. Koaxial zur Magnetwicklung 77 ist eine zwischen der Magnetwicklung 77 und dem Ventilgehäuse 71 angeordnete Druckfeder 83 vorgesehen, die sich einerseits am Ventilgehäuse 71 und andererseits am Flachanker 81 abstützt. Der Flachanker 81 weist im Bereich seines ersten Ventilsitzes 79 eine Öffnung 84 auf, in die der ringförmige erste Ventilsitz 79 ragt und die auf der dem ersten Ventilsitz 79 abgewandten Seite des Flachankers 81 durch ein mit dem Flachanker 81 verbundenes Dichtelement 85, zum Beispiel ein Flachgummiteil überdeckt wird. Im Deckel 70 ist dem Dichtelement 85 des Flachankers 81 zugewandt der zweite Ventilsitz 86 vorgesehen, in den eine Strömungsbohrung 87 des Unterdruckanschlusses 40 des Elektromagnetventils 6 mündet, der mit dem Ansaugrohr 18 verbunden ist.

Das Ventilgehäuse 71 hat einen Kragen 75, der unter Zwischenlage einer Dichtung an einem Bund 76 des Bodens 66 anliegt, so daß der Zwischenraum 58 von dem Raum 80 getrennt wird. Der Raum 80 steht über einen im Boden 66 ausgebildeten Strömungskanal 90 mit dem Pumpraum 56 in Verbindung. Der Förderraum 57 ist einerseits von der Pumpmembran 30 und andererseits von einer scheibenförmigen Rückschlagventilhalterung 93 der Rückschlagventile 28, 29 begrenzt. Die Rückschlagventilhalterung 93 ist gehäusefest mit dem unteren Gehäuseteil 53 verbunden und besitzt symmetrisch zur Längsachse 45 eine links der Längsachse 45 dargestellte, linke Rückschlagventilöffnung 104 und eine rechts der Längsachse 45 dargestellte, rechte Rückschlagventilöffnung 106. Zwischen den beiden Rückschlagventilöffnungen 104, 106 ist mittig zur Längsachse 45 eine Führungshülse 92 mit der Rückschlagventilhalterung 93 verbunden, in welcher der Stößel 60 axial verschiebbar aufgenommen wird. Der Stößel 60 ragt aus einer dem Elektromagnetventil 6 zugewandten Bodenfläche 67 des Federtellers 64 etwas heraus und weist an seinem im Pumpraum 56 angeordneten Endabschnitt 61 ein Kontaktteil, beispielsweise einen Magnetring 94 oder eine bestromte Spule auf. Der Magnetring 94 oder die Spule ist erforderlich, um einen dem Fachmann bekannten, sogenannten Reed-Schalter zu betätigen. Der Reed-Schalter setzt sich aus magnetischen Kontakten zusammen, die beispielsweise in ein Glasrohr eingeschmolzen sind und die durch ein magnetisches Feld eines Dauermagneten, im Ausführungsbeispiel des Magnetringes 94, oder eines von der Spule gebildeten Elektromagneten, betätigt werden. Im Ausführungsbeispiel sind zwei Reed-Schalter 96, 97 vorgesehen, wobei, wie in der Figur 2b dargestellt ist, ein erster Reed-Schalter 96 im Pumpraum 56 und unterhalb von diesem ein zweiter Reed-Schalter 97 im Förderraum 57 untergebracht ist. Die Reed-Schalter 96, 97 werden mit Hilfe des Magnetrings 94 vom Stößel 60 betätigt, wenn dieser mit seinem Endabschnitt 61 mit dem Magnetring 94 in unmittelbare Nähe eines Reed-Schalters 96 oder 97 gelangt. Beide Reed-Schalter 96, 97 sind mittels nicht näher dargestellter, elektrischer Leitungen beispielsweise direkt mit dem Elektromagnetventil 6 verbunden, um dieses in einen erregten Zustand oder in einen nicht erregten Zustand zu schalten. Es ist auch möglich, beide Reed-Schalter 96, 97 mit dem elektronischen Steuergerät 34 zu verbinden, um diesem die elektrischen Schaltimpulse der Reed-Schalter 96, 97 direkt zuzuführen, so daß das elektronische Steuergerät 34 das Elektromagnetventil 6 anzusteuern kann. Die Pumpvorrichtung 5 besitzt einen elektrischen Stecker 89, der zur Stromversorgung des Elektromagnetventils 6 und beispielsweise zum Anschluß des elektronischen Steuergeräts 34 dient. Der Stecker 89 ist am Deckel 70 vorgesehen und beispielsweise dreipolig ausgebildet. Zur Verbindung der Reed-Schalter 96, 97 mit dem Elektromagnetventil 6 und beispielsweise mit dem Stecker 89 sind nicht näher dargestellte, elektrische Leitungen vorgesehen, die von der unteren Gehäusehälfte 53 zur oberen Gehäusehälfte 52 und zum Elektromagnetventil 6 und zum Stecker 89 führen. Die Pumpmembran 30 ist in der Figur 2b in ihrer obersten Lage und in der Figur 2a in ihrer untersten Lage dargestellt. Zwischen der untersten und der obersten Lage der Pumpmembran 30 ist der Arbeitsbereich der Pumpmembran 30 festgelegt, welcher in etwa dem axialen Abstand beider Reed-Schalter 96, 97 entspricht. Es ist auch möglich, andere Mittel zur Erfassung der jeweiligen Stellung der Pumpmembran 30 vorzusehen. Beispielsweise kann der Endabschnitt 61 des Stößels 60 einen Kontaktstift aufweisen, der beim Verlassen des Arbeitsbereiches der Pumpmembran 30 einen elektrischen Kontakt zu korrespondierend angebrachten, axial voneinander entfernten Kontaktaufnehmer herstellt.

Das in Figur 2a links dargestellte Rückschlagventil 28 besitzt einen topfförmigen Aufsatz 98, innerhalb dessen ein scheibenförmiges Ventilschließglied 100 eingebracht ist. Der Aufsatz 98 befindet sich innerhalb des Förderraums 57 und weist eine Öffnung 102 auf, um einen Innenraum des Aufsatzes 98 mit dem Förderraum 57 zu verbinden. Das Ventilschließglied 100 stützt sich an einer Druckfeder 105 gegen eine Innenwandung des Aufsatzes 98 ab, um bei Überdruck im Förderraum 57 die in der Rückschlagventilhalterung 93 vorgesehene Rückschlagventilöffnung 104 zur Zuführleitung 37 zu schließen und bei Unterdruck im Förderraum 57 zu öffnen. Das in Figur 2b rechts der Querachse 45 dargestellte, rechte Rückschlagventil 29 ist entsprechend dem linken Rückschlagventil 28 aufgebaut, wobei ein topfförmiger rechter Aufsatz 99 in die Förderleitung 38 ragt. Der rechte Aufsatz 99 besitzt eine Öffnung 103, die einen Innenraum des rechten Aufsatzes 99 mit der Förderleitung 38 verbindet. In dem Innenraum des rechten Aufsatzes 99 ist ein scheibenförmiges Ventilschließglied 107 untergebracht, welches die in der Rückschlagventilhalterung 93 ausgenommene Rückschlagventilöffnung 106 schließt und dann öffnet, wenn der Druck im Förderraum 57 höher ist, als der Druck in der Förderleitung 38. Das rechte Ventilschließglied 107 stützt sich gegen eine im Innenraum des rechten Aufsatzes 99 untergebrachte, am Aufsatz 99 anliegende Druckfeder 108 ab. Beide Druckfedern 105, 108 besitzen eine relativ geringe Federkonstante, so daß beide Rückschlagventile 28, 29 mit geringer Druckkraft betätigbar sind, um mit nur äußerst geringem Strömungswiderstand ein rasches Öffnen und Schließen der Rückschlagventile 28, 29 zu ermöglichen.

Wie in der Figur 3, einem Schnitt entlang der Linie III-III in Figur 2a/2b, dargestellt ist, ist an der Führungshülse 92 einstückig ein radialer Trennsteg 111 angeformt, der einen zwischen einer Trennscheibe 110 und der Rückschlagventilhalterung 93 gebildeten, axialen Zwischenraum in einen in Figur 2a links der Längsachse 45 gelegenen Ansaugraum 47 und in einen in Figur 2b rechts der Längsachse 45 gelegenen Überdruckraum 48 aufteilt und druckdicht den Ansaugraum 47 vom Überdruckraum 48 abschließt. Die Trennscheibe 110 begrenzt einen topfförmig ausgebildeten Teil 54 der unteren Gehäusehälfte 53, in welcher das Absperrventil 25 untergebracht ist. Der Ansaugraum 47 ist über eine Öffnung 113 in der Trennscheibe 110 und der Überdruckraum 48 über eine Öffnung 115 in der Trennscheibe 110 mit einem Innenraum 26 des Absperrventils 25 verbunden. In den Innenraum 26 des Absperrventils 25 ragt der Stößel 60, an dessen dem Endabschnitt 61 gegenüberliegenden zweiten Endabschnitt 126 ein hülsenförmiges Schließglied 117 angebracht ist. Das Schließglied 117 besitzt eine mittig ausgenommene Ausnehmung 118, innerhalb derer der Stößel 60 axial verschiebbar aufgenommen ist. Weiterhin besitzt das Schließglied 117 einen ringförmigen Schließteil 119, an dessen der Trennscheibe 110 zugewandten Stirnfläche 120, beispielsweise in einer umlaufenden Ringnutfläche ein Dichtring 121 eingelegt ist. Bei geschlossenem Schließglied 117 liegt der Dichtring 121 an einem an die Trennscheibe 110 hülsenförmig angeformten Ansatz 122 der Trennscheibe 110 an, wobei die Öffnung 115 radial innerhalb des hülsenförmigen Ansatzes 122 liegt und somit den darin liegenden Innenraum 26 mit dem Überdruckraum 48 verbindet. Bei an dem Ansatz 122 anliegendem Dichtring 121 ist somit eine Strömungsverbindung von dem Überdruckraum 48 zu der außerhalb des Ansatzes 122 liegenden Öffnung 113 und damit zum Innenraum 26 und zum Ansaugraum 47 unterbrochen. Das Schließteil 119 des Schließgliedes 117 wird von einer Druckfeder 123 beaufschlagt, welche sich an dem Schließteil 119 und an einem Boden 125 der unteren Gehäusehälfte 53 abstützt und das Schließteil 119 in Richtung zu dem Ansatz 122 in Schließrichtung beaufschlagt. Die Ausnehmung 118 des Schließgliedes 117 wird durch eine Querwand 124 begrenzt. Bei nicht erregtem Elektromagnetventil 6 verschiebt die Pumpfeder 65 den Federteller 64 und damit den Stößel 60 in seine unterste Stellung, in der sein Endabschnitt 126 an der Querwand 124 anliegt und das Schließglied 117 entgegen der Kraft der Druckfeder 123 von dem Ansatz 122 in Öffnungsrichtung abhebt. In der Pumpphase der Pumpvorrichtung 5 hat der Endabschnitt 126 des Stößels 60 von der Querwand 124 derart abgehoben, daß das Schließteil 119 durch die Druckfeder 123 an den Ansatz 122 gepreßt wird und damit das Absperrventil 25 geschlossen ist.

Im folgenden soll die Arbeitsweise der Pumpvorrichtung 5 geschildert werden. Bei nicht erregtem Elektromagnetventil 6 ist der Flachanker 81 aufgrund der Druckkraft der Druckfeder 83 in Richtung des zweiten Ventilsitzes 86 verschoben, so daß das Dichtelement 85 diesen verschließt. In dieser, in der Figur 2a dargestellten Stellung kann über die Belüftungsöffnung 42 Umgebungsluft zum ersten Ventilsitz 79 und von dort in den Raum 80, den Strömungskanal 90 und in den Pumpraum 56 strömen. Die Pumpmembran 30 wird dabei unter Mitwirkung der Pumpfeder 65 nach unten in Richtung einer Stirnfläche 63 der Führungshülse 92 bewegt. Bevor jedoch die Pumpmembran 30 ihre unterste Stellung erreicht, bei der eine, der Bodenfläche 67 des Federtellers 64 abgewandte Stirnfläche 62 der Pumpmembran 30 an einer, der Stirnfläche 62 zugewandten Stirnfläche 63 der Führungshülse 92 anliegt, wird mittels der Umschaltung des unteren, zweiten Reed-Schalters 97 das Elektromagnetventil 6 erregt. Bei erregtem Elektromagnetventil 6 wird der Flachanker 81 zum Kern 72 hingezogen, so daß das Dichtelement 85 den ersten Ventilsitz 79 verschließt und den zweiten Ventilsitz 86 freigibt. Anschließend kann bei geöffneten zweiten Ventilsitz 86 aus dem Pumpraum 56 über den Strömungskanal 90, dem Raum 80, dem zweiten Ventilsitz 86 und dem Unterdruckanschluß 40 des Elektromagnetventils 6 Luft zum Ansaugrohr 18 abströmen, so daß eine Druckerniedrigung im Pumpraum 56 eintritt. Die Druckerniedrigung im Pumpraum 56 hat zur Folge, daß die an der Pumpmembran 30 angreifenden Druckkräfte eine Bewegungsumkehr der Pumpmembran 30 bewirken, wobei die Pumpmembran 30 entgegen der Kraft der Pumpfeder 65 durch den Druck im Förderraum 57 nach oben gedrückt wird, bis der obere, erste Reed-Schalter 96 betätigt und damit entregt wird. Am Ende des erregten Zustandes des Elektromagnetventils 6 nimmt der Flachanker 81 und das Dichtelement 85 wieder eine Stellung ein, wie sie in der Figur 2b dargestellt ist.

Bei der Bewegung der Pumpmembran 30 zu ihrer obersten Stellung öffnet das linke Rückschlagventil 28, wobei das rechte Rückschlagventil 29 geschlossen ist, so daß Umgebungsluft aus der Umgebung über den Umgebungsluftfilter 31 in die Zuführleitung 37, den Ansaugraum 47 und über die linke Rückschlagventilöffnung 104 und die Öffnung 102 in den Förderraum 57 einströmt. Bei der nachfolgenden entgegengesetzten Bewegung der Pumpmembran 30 schließt das linke Rückschlagventil 28, so daß bei geschlossenem rechten Rückschlagventil 29 die im Förderraum 57 eingeschlossene Umgebungsluft durch die Pumpfeder 65 komprimiert wird, um bei einem durch die Druckfeder 108 vorgebbaren Überdruck durch Öffnen des rechten Rückschlagventils 29 in die Förderleitung 38 einzuströmen. Bei bewegter Pumpmembran 30 bewegt sich der Stößel 60 in der Ausnehmung 118 des Schließgliedes 117, wobei die Druckfeder 123 den Dichtring 121 an seinen Ansatz 122 drückt, so daß das Absperrventil 25 in einer Schließstellung die Förderleitung 38 von der Zuführleitung 27 absperrt. Nur in der untersten Stellung der Pumpmembran 30 bei nicht erregtem Elektromagnetventil 6 befindet sich auch der Stößel 60 in seiner untersten, das Absperrventil 25 öffnenden Stellung, wobei die Stirnfläche 62 der Pumpmembran 30 an der Stirnfläche 63 der Führungshülse 92 anliegt. Die unterste Stellung der Pumpmembran 30 ist immer dann erreicht, wenn keine durch das elektronische Steuergerät 34 vorgegebene Dichtheitsprüfung erfolgt.

Zur Dichtheitsprüfung wird die Pumpvorrichtung 5 nur eine zeitlang vom elektronischen Steuergerät 34 angesteuert, bis nach einer vorgegebenen Anzahl von Pumpbewegungen der Pumpmembran 30, beispielsweise dreißig Pumpbewegungen, sich ein bestimmter Überdruck im Tanksystem 1 aufgebaut hat, wonach das Elektromagnetventil 6 im erregten Zustand verharrt. Bei einer Leckage im Tanksystem 1 baut sich der im Tanksystem 1 herrschende Überdruck wieder ab, wobei durch den Druckabfall sich das rechte Rückschlagventil 29 öffnet und die Pumpmembran 30 nach unten gezogen wird. Beim Erreichen des in Figur 2b unterhalb der Pumpmembran 30 dargestellten, zweiten Reed-Schalters 97, wird die Pumpvorrichtung 5 wieder in Betrieb genommen, und zwar solange, bis sich die Pumpmembran 30 wieder in der Arbeitsstellung zwischen beiden Reed-Schaltern 96, 97 befindet, beziehungsweise bis wieder ein bestimmter Überdruck im Tanksystem 1 herrscht. Dabei ist die benötigte Zeit, die zwischen der mehrmaligen Betätigung der Pumpvorrichtung 5 zur Wiederherstellung des Überdrucks benötigt wird, ein Maß für die Größe der aufgetretenen Leckage.

Die Figur 4a/4b zeigt einen Schnitt der erfindungsgemäßen Pumpvorrichtung 5 gemäß einem zweiten Ausführungsbeispiel, wobei alle gleichen oder gleichwirkenden Teile mit den gleichen Bezugszeichen der Figuren 1, 2a/2b und 3 gekennzeichnet sind. Abweichend zum ersten Ausführungsbeispiel der Figur 2a/2b, ist zur Belüftung des Elektromagnetventils 6 ein zweiteiliger Strömungskanal 130, 131 ausgebildet, der im Innern des Gehäuses der Pumpvorrichtung 5 vom Elektromagnetventil 6 zur Zuführleitung 37, beziehungsweise zum Ansaugraum 47 führt, so daß die zur Belüftung des Elektromagnetventils 6 angesaugte Umgebungsluft direkt über den Umgebungsluftfilter 31 einströmen kann. Da die zur Belüftung angesaugte Umgebungsluft bereits vom Umgebungsluftfilter 31 gefiltert wird, kann der Pumpfilter 32 im Elektromagnetventil 6 entfallen. Der in der Figur 4a in dargestellte, abgewinkelte Strömungskanal 130, 131 kann von zwei Teilkanälen 130, 131 gebildet werden, wobei sich der eine Teilkanal 130 in der Auswölbung 68 und der andere Teilkanal 131 in der unteren Gehäusehälfte 53 erstreckt. Beim Zusammenbau des Gehäuses münden an einer Schnittstelle zwischen der Auswölbung 68 und der unteren Gehäusehälfte 53 die Teilkanäle 130, 131 ineinander. Es ist auch möglich, anstelle der Teilkanäle 130, 131 entsprechend ausgebildete Ringspaltkanäle vorzusehen, die sich zumindest teilweise ringförmig in der Auswölbung 68 und im unteren Gehäuseteil 53 radial erstrecken und die wiederum beim Zusammenbau des Gehäuses 53, 63 an der Schnittstelle zwischen der Auswölbung 68 und, der unteren Gehäusehälfte 53 ineinander münden, um damit eine Belüftungsverbindung vom Elektromagnetventil 6 zur Umgebung im Innern des Gehäuses 53, 63 zu bilden.

## Patentansprüche

1. Pumpvorrichtung, insbesondere für ein Tanksystem einer Brennkraftmaschine, mit einem integrierten Elektromagnetventil, mit einer Pumpmembran, mit einem zwischen dem Elektromagnetventil und der Pumpmembran ausgebildeten Pumpraum, mit einem zwischen der Pumpmembran und einer Rückschlagventilanordnung ausgebildeten Förderraum, der über ein erstes Rückschlagventil über eine Zuführleitung mit Umgebungsluft und über ein zweites Rückschlagventil und einer Förderleitung mit dem Tanksystem verbindbar ist, und mit einem zwischen der Zuführleitung und der Förderleitung vorgesehenen Absperrventil, wobei im erregten Zustand des Elektromagnetventils der Pumpraum mit einer Unterdruckquelle und im nicht erregten Zustand des Elektromagnetventils mit Umgebungsluft verbindbar ist, so daß die Pumpmembran aufgrund der wechselnden Druckverhältnisse im Pumpraum eine axiale Pumpbewegung ausführt, mittels welcher Umgebungsluft über das erste Rückschlagventil in den Förderraum angesaugt und über das zweite Rückschlagventil bei geschlossenem Absperrventil in das Tanksystem gefördert wird, dadurch gekennzeichnet, daß das Elektromagnetventil (6) über eine Belüftungsöffnung (42) direkt mit der Umgebung verbunden ist.

2. Pumpvorrichtung nach Anspruch 1, dadurch gekennzeichnet, daß zwischen der Belüftungsöffnung (42) und einem Ventilsitz (79) des Elektromagnetventiis (6) ein Pumpfilter (32) vorgesehen ist.

3. Pumpvorrichtung nach Anspruch 1, dadurch gekennzeichnet, daß die Belüftungsöffnung (42) von einer überstehenden Nase (91) eines Deckels (70) der Pumpvorrichtung (5) überdeckt ist.

4. Pumpvorrichtung nach Anspruch 3, dadurch gekennzeichnet, daß die Nase (91) in Richtung zur Belüftungsöffnung (42) sich erstreckende Stege (43) aufweist.

5. Pumpvorrichtung, insbesondere für ein Tanksystem einer Brennkraftmaschine, mit einem integrierten Elektromagnetven til, mit einer Pumpmembran, mit einem zwischen dem Elektromagnetventil und der Pumpmembran ausgebildeten Pumpraum, mit einem zwischen der Pumpmembran und einer Rückschlagventilanordnung ausgebildeten Förderraum, der über ein erstes Rückschlagventil über eine Zuführleitung mit Umgebungsluft und über ein zweites Rückschlagventil und einer Förderleitung mit dem Tanksystem verbindbar ist, und mit einem zwischen der Zuführleitung und der Förderleitung vorgesehenen Absperrventil, wobei im erregten Zustand des Elektromagnetventils der Pumpraum mit einer Unterdruckquelle und im nicht erregten Zustand des Elektromagnetventils mit Umgebungsluft verbindbar ist, so daß die Pumpmembran aufgrund der wechselnden Druckverhältnisse im Pumpraum eine axiale Pumpbewegung ausführt, mittels welcher Umgebungsluft über das erste Rückschlagventil in den Förderraum angesaugt und über das zweite Rückschlagventil bei geschlossenem Absperrventil in das Tanksystem gefördert wird, dadurch gekennzeichnet, daß das Elektromagnetventi (6) über einen sich im Innern des Gehäuses (53, 68) der Pumpvorrichtung (5) erstrecken Strömungskanal (130, 131) mit der Umgebung verbunden ist.

6. Pumpvorrichtung nach Anspruch 5, dadurch gekennzeichnet, daß der Strömungskanal (130, 131) mit der Zuführleitung (37) verbunden ist.

7. Pumpvorrichtung nach Anspruch 5, dadurch gekennzeichnet, daß der Strömungskanal (130, 131) zumindest teilweise ringförmig ausgebildet ist.

## Claims

1. Pump appliance, in particular for a tank system of an internal combustion engine, having an integrated electromagnetic valve, having a pump diaphragm, having a pump space formed between the electromagnetic valve and the pump diaphragm, having a delivery space formed between the pump diaphragm and a non-return valve arrangement, which delivery space can be connected via a first non-return valve and via a supply conduit to ambient air and via a second non-return valve and a delivery conduit to the tank system, and having a shut-off valve provided between the supply conduit and the delivery conduit, it being possible to connect the pump space with a vacuum source in the excited condition of the electromagnetic valve and to ambient air in the non-excited condition of the electromagnetic valve so that the pump diaphragm executes an axial pumping motion which is due to the alternating pressure relationships in the pump space and by means of which ambient air is induced via the first non-return valve into the delivery space and, when the shut-off valve is closed, is delivered via the second non-return valve into the tank system, characterized in that the electromagnetic valve (6) is directly connected to the surroundings by means of a ventilation opening (42).

2. Pump appliance according to Claim 1, characterized in that a pump filter (32) is provided between the ventilation opening (42) and a valve seat (79) of the electromagnetic valve (6).

3. Pump appliance according to Claim 1, characterized in that the ventilation opening (42) is overlapped by a protruding projection (91) of a cap (70) of the pump appliance (5).

4. Pump appliance according to Claim 3, characterized in that the projection (91) has protrusions (43) extending in the direction towards the ventilation opening (42).

5. Pump appliance, in particular for a tank system of an internal combustion engine, having an integrated electromagnetic valve, having a pump diaphragm, having a pump space formed between the electromagnetic valve and the pump diaphragm, having a delivery space formed between the pump diaphragm and a non-return valve arrangement, which delivery space can be connected via a first non-return valve and via a supply conduit to ambient air and via a second non-return valve and a delivery conduit to the tank system, and having a shut-off valve provided between the supply conduit and the delivery conduit, it being possible to connect the pump space with a vacuum source in the excited condition of the electromagnetic valve and to ambient air in the non-excited condition of the electromagnetic valve so that the pump diaphragm executes an axial pumping motion which is due to the alternating pressure relationships in the pump space and by means of which ambient air is induced via the first non-return valve into the delivery space and, when the shut-off valve is closed, is delivered via the second non-return valve into the tank system, characterized in that the electromagnetic valve (6) is connected to the surroundings via a flow passage (130, 131) extending within the housing (53, 68) of the pump appliance (5).

6. Pump appliance according to Claim 5, characterized in that the flow passage (130, 131) is connected to the supply conduit (37).

7. Pump appliance according to Claim 5, characterized in that the flow passage (130, 131) has an at least partially annular configuration.

## Revendications

1. Dispositif de pompage, en particulier pour un système de réservoir d'un moteur à combustion interne, comprenant une électrovanne intégrée, une membrane de pompage, une chambre de pompage constituée entre l'électrovanne et la membrane de pompage, d'une chambre de refoulement constituée entre la membrane de pompage et un agencement de clapets antiretour, chambre de refoulement qui peut être reliée, au moyen d'un premier clapet antiretour par une conduite d'alimentation, avec l'air environnant et, au moyen d'un deuxième clapet antiretour et d'une conduite de refoulement, avec le système de réservoir et une vanne d'obturation prévue entre la conduite d'alimentation et la conduite de refoulement, la chambre de pompage, quand l'électrovanne est en état d'excitation, pouvant être reliée à une source de dépression et quand l'électrovanne n'est pas excitée, à l'air environnant, de telle sorte que la membrane de pompage exécute, du fait des conditions de pression qui alternent dans la chambre de pompage, un mouvement axial de pompage au moyen duquel de l'air environnant est aspiré via le premier clapet antiretour dans la chambre de refoulement et est refoulé via le deuxième clapet antiretour quand la vanne d'obturation et fermée, dans le système de réservoir,
caractérisé en ce que
l'électrovanne (6) est reliée par l'intermédiaire d'un orifice d'aération (42) directement à l'air environnant.

2. Dispositif de pompage selon la revendication 1,
caractérisé en ce qu'
entre l'orifice d'aération (42) et un siège (79) de l'électrovanne (6), on prévoit un filtre de pompage (30).

3. Dispositif de pompage selon la revendication 1,
caractérisé en ce que
l'orifice d'aération (42) est recouvert par un nez en surplomb (91) d'un couvercle (70) du dispositif de pompage (5).

4. Dispositif de pompage selon la revendication 3,
caractérisé en ce que
le nez (91) présente des nervures (43) qui s'étendent en direction de l'orifice d'aération (42).

5. Dispositif de pompage, en particulier pour un système de réservoir d'un moteur à combustion interne, comprenant une électrovanne intégrée, une membrane de pompage, une chambre de pompage constituée entre l'électrovanne et la membrane de pompage, d'une chambre de refoulement constituée entre la membrane de pompage et un agencement de clapets antiretour, chambre de refoulement qui peut être reliée, au moyen d'un premier clapet antiretour par une conduite d'alimentation, avec l'air environnant et, au moyen d'un deuxième clapet antiretour et d'une conduite de refoulement, avec le système de réservoir et une vanne d'obturation prévue entre la conduite d'alimentation et la conduite de refoulement, la chambre de pompage, quand l'électrovanne est en état d'excitation, pouvant être reliée à une source de dépression et quand l'électrovanne n'est pas excitée, à l'air environnant, de telle sorte que la membrane de pompage exécute, du fait des conditions de pression qui alternent dans la chambre de pompage, un mouvement axial de pompage au moyen duquel de l'air environnant est aspiré via le premier clapet antiretour dans la chambre de refoulement et est refoulé via le deuxième clapet antiretour quand la vanne d'obturation et fermée, dans le système de réservoir,
caractérisé en ce que
l'électrovanne (6) est reliée avec l'atmosphère environnante au moyen d'un canal d'écoulement (130, 131) qui s'étend à l'intérieur du boîtier (53, 68) du dispositif de pompage (5).

6. Dispositif de pompage selon la revendication 5,
caractérisé en ce que
le canal d'écoulement (130, 131) est relié à la conduite d'alimentation (37).

7. Dispositif de pompage selon la revendication 5,
caractérisé en ce que
le canal d'écoulement (130, 131) est constitué au moins en partie en forme d'anneau.
